(19)

Europäisches
Patentamt

European
Patent Office

Office européen
des brevets

(11)    EP 2 940 165 B1

(12)    **EUROPEAN PATENT SPECIFICATION**

(45) Date of publication and mention
of the grant of the patent:
**11.07.2018  Bulletin 2018/28**

(21) Application number: **13867316.5**

(22) Date of filing: **25.12.2013**

(51) Int Cl.:
*C22C 9/04* (2006.01)      *C22F 1/00* (2006.01)
*C22F 1/02* (2006.01)      *C22F 1/08* (2006.01)
*H01B 1/02* (2006.01)      *H01B 5/02* (2006.01)

(86) International application number:
**PCT/JP2013/084748**

(87) International publication number:
**WO 2014/104130 (03.07.2014 Gazette 2014/27)**

(54) **COPPER ALLOY FOR ELECTRICAL AND ELECTRONIC EQUIPMENT, COPPER ALLOY THIN SHEET FOR ELECTRICAL AND ELECTRONIC EQUIPMENT, AND CONDUCTIVE PART AND TERMINAL FOR ELECTRICAL AND ELECTRONIC EQUIPMENT**

KUPFERLEGIERUNG FÜR ELEKTRISCHE UND ELEKTRONISCHE VORRICHTUNGEN, KUPFERLEGIERUNGSDÜNNSCHICHT FÜR ELEKTRISCHE UND ELEKTRONISCHE VORRICHTUNGEN SOWIE LEITFÄHIGES TEIL UND ENDGERÄT FÜR ELEKTRISCHE UND ELEKTRONISCHE VORRICHTUNGEN

ALLIAGE DE CUIVRE POUR ÉQUIPEMENT ÉLECTRIQUE ET ÉLECTRONIQUE, FINE FEUILLE D'ALLIAGE DE CUIVRE POUR ÉQUIPEMENT ÉLECTRIQUE ET ÉLECTRONIQUE ET PARTIE CONDUCTRICE ET BORNE POUR ÉQUIPEMENT ÉLECTRIQUE ET ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.12.2012  JP 2012282680
05.12.2013  JP 2013252330**

(43) Date of publication of application:
**04.11.2015  Bulletin 2015/45**

(73) Proprietors:
• **Mitsubishi Materials Corporation**
**Chiyoda-ku**
**Tokyo 100-8117 (JP)**
• **Mitsubishi Shindoh Co., Ltd.**
**Tokyo 140-8550 (JP)**

(72) Inventors:
• **MAKI, Kazunari**
**Kitamoto-shi**
**Saitama 364-0022 (JP)**
• **MORI, Hiroyuki**
**Kitamoto-shi**
**Saitama 364-0022 (JP)**

• **YAMASHITA, Daiki**
**Kitamoto-shi**
**Saitama 364-0022 (JP)**

(74) Representative: **Hoffmann Eitle
Patent- und Rechtsanwälte PartmbB
Arabellastraße 30
81925 München (DE)**

(56) References cited:
**WO-A1-2012/096237    JP-A- H0 533 087
JP-A- 2003 306 732    JP-A- 2003 306 732
JP-A- 2006 283 060    JP-A- 2012 122 095
JP-A- 2012 180 593    US-B1- 6 471 792**

• **ANDRADE J M ET AL: "Classical univariate calibration and partial least squares for quantitative analysis of brass samples by laser-induced breakdown spectroscopy", SPECTROCHIMICA ACTA. PART B: ATOMIC SPECTROSCOPY, NEW YORK, NY, US, US, vol. 65, no. 8, 24 April 2010 (2010-04-24) , pages 658-663, XP027144315, ISSN: 0584-8547 [retrieved on 2010-04-24]**

**Description**

TECHNICAL FIELD

The present invention relates to a Cu-Zn-Sn-based copper alloy for an electric and electronic device, a copper alloy sheet for an electric and electronic device, a conductive component for an electric and electronic device, and a terminal using the same, the copper alloy being used as a conductive component for an electric and electronic device such as a connector of a semiconductor device, other terminals thereof, a movable contact of an electromagnetic relay, or a lead frame.

Priority is claimed on Japanese Patent Application No. 2012-282680, filed December 26, 2012, and Japanese Patent Application No. 2013-252330, filed December 5,2013.

BACKGROUND ART

As a material of a conductive component for an electric and electronic device, a Cu-Zn alloy is widely used in the related art from the viewpoint of, for example, balance between strength, workability, and cost.

In addition, in the case of a terminal such as a connector, in order to improve reliability of contact with an opposite-side conductive member, a surface of a substrate (blank) formed of a Cu-Zn alloy is plated with tin (Sn). In a conductive component such as a connector obtained by plating a surface of a Cu-Zn alloy as a substrate with Sn, a Cu-Zn-Sn-based alloy may be used in order to improve the recycling efficiency of the Sn-plated substrate and the strength.

Here, typically, a conductive component for an electric and electronic device such as a connector is manufactured by punching a sheet (rolled sheet) having a thickness of about 0.05 mm to 1.0 mm into a predetermined shape and bending at least a portion of the sheet. In this case, a peripheral portion around the bent portion is brought into contact with an opposite-side conductive member so as to obtain an electric connection with the opposite-side conductive member, and due to the spring properties of the bent portion, the contact state with the opposite-side conductive member is maintained.

It is preferable that a copper alloy for an electric and electronic device used for a conductive component for an electric and electronic device is superior in conductivity, reliability, and punchability. Further, as described above, in the case of the connector or the like in which the contact state between the peripheral portion around the bent portion and the opposite-side conductive member is maintained due to the spring properties of the bent portion obtained by bending, bendability and stress relaxation resistance are required to be superior.

For example, Patent Documents 1 to 3 disclose methods for improving the stress relaxation resistance of a Cu-Zn-Sn-based alloy.

Patent Document 1 describes that stress relaxation resistance can be improved by adding Ni to a Cu-Zn-Sn-based alloy to produce a Ni-P compound. In addition, Patent Document 1 describes that the addition of Fe is also efficient for improvement of stress relaxation resistance.

Patent Document 2 describes that strength, elasticity, and heat resistance can be improved by adding Ni and Fe to a Cu-Zn-Sn-based alloy together with P to produce a compound. The above-described improvement of strength, elasticity, and heat resistance implies improvement of stress relaxation resistance.

In addition, Patent Document 3 describes that stress relaxation resistance can be improved by adding Ni to a Cu-Zn-Sn-based alloy and adjusting a Ni/Sn ratio to be in a specific range. In addition, Patent Document 3 describes that the addition of a small amount of Fe is also efficient for improving stress relaxation resistance.

Further, Patent Document 4 targeted for a lead frame material describes that stress relaxation resistance can be improved by adding Ni and Fe to a Cu-Zn-Sn-based alloy together with P, adjusting an atomic ratio (Fe+Ni)/P to be in a range of 0.2 to 3, and producing a Fe-P-based compound, a Ni-P-based compound, and a Fe-Ni-P-based compound.

Patent Document 5 describes a brass alloy, consisting, by weight, of from 2% to the maximum that maintains an alpha brass microstructure of zinc; from 0.2% to 2% nickel; from 0.15% to 1% tin; from 0.033% to 0.2% phosphorous; optional from 0.07% to 0.25% iron; from about 2 ppm to about 50 ppm of oxygen, sulfur, carbon or a mixture thereof; less than 2% in total of bismuth, lead, tellurium, sulfur and selenium; less than 0.25% each and 1% in total of magnesium, aluminum, silver, silicon, cadmium, manganese, cobalt, germanium, arsenic, gold, platinum, palladium, hafnium, zirconium, indium, antimony, chromium, vanadium and titanium; and the balance copper and inevitable impurities with a nickel:phosphorous weight ratio of between 4.5:1 and 9:1. The alloy can be used to form an electrical connector having a conductivity equal to or greater than 25% IACS and a resistance to stress relaxation at an operating temperature of at least 125°C.

Non-Patent Document 1 describes a comparison of the analytical results obtained by traditional calibration curves and multivariate partial least squares (PLS) algorithm when applied to the LIBS spectra obtained from ten brass samples.

Citation List

Patent Document

[Patent Document 1] Japanese Unexamined Patent Application, First Publication No. H5-33087
[Patent Document 2] Japanese Unexamined Patent Application, First Publication No. 2006-283060
[Patent Document 3] Japanese Patent No. 3953357
[Patent Document 4] Japanese Patent No. 3717321
[Patent Document 5] US 6 471 792 B1

[Non-Patent Document 1] J. M. Andrade, et. al., Spectrochimica Acta. Part B, Vol. 65, No. 8, pages 658 to 663 (2010)

DISCLOSURE OF INVENTION

Technical Problem

However, Patent Documents 1 and 2 consider only each content of Ni, Fe, and P, and the adjustment of each content cannot necessarily realize reliable and sufficient improvement of stress relaxation resistance.
In addition, Patent Document 3 discloses the adjustment of the Ni/Sn ratio but does not consider a relationship between a P compound and stress relaxation resistance at all. Therefore, sufficient and reliable improvement of stress relaxation resistance cannot be realized.
Further, Patent Document 4 only describes the adjustment of the total content of Fe, Ni, and P and the adjustment of the atomic ratio of (Fe+Ni)/P and cannot realize sufficient improvement of stress relaxation resistance.
As described above, with the methods disclosed in the related art, the stress relaxation resistance of a Cu-Zn-Sn-based alloy cannot be sufficiently improved. Therefore, in a connector or the like having the above-described structure, residual stress is relaxed over time or in a high-temperature environment, and contact pressure with an opposite-side conductive member is not maintained. As a result, there is a problem in that a problem such as contact failure is likely to occur in the early stages. In order to avoid such a problem, in the related art, the thickness of a material is inevitably increased, which causes an increase in material cost and weight.
Therefore, more reliable and sufficient improvement in stress relaxation resistance is strongly desired.
The present invention is made under the above-described circumstances and an object thereof is to provide a copper alloy for an electric and electronic device, a copper alloy sheet for an electric and electronic device using the same, a component for an electric and electronic device and a terminal, the copper alloy having reliably and sufficiently excellent stress relaxation resistance, being capable of having a smaller thickness as material of a component than the conventional alloy, and having excellent properties such as strength, bendability, and conductivity.

Solution to Problem

As a result of extensive experiments and research, the inventors have obtained the following findings. Appropriate amounts of Ni and Fe are added and an appropriate amount of P is added to the Cu-Zn-Sn-based alloy, and a ratio Fe/Ni of a Fe content to a Ni content, a ratio (Ni+Fe)/P of a total content (Ni+Fe) of Ni and Fe to a P content, and a ratio Sn/(Ni+Fe) of a Sn content to a total content (Ni+Fe) of Ni and Fe are controlled to be in appropriate ranges by atomic ratio, thereby, appropriately precipitating precipitates containing Fe, Ni, and P. In addition to that, the amounts of H, O, S, and C, which are gas impurity elements, are appropriately controlled. Thus, it is possible to obtain a copper alloy having reliably and sufficiently improved stress relaxation resistance, and excellent strength and bendability. The present invention has been made based on the above-described findings.
Further, the inventors have found that the stress relaxation resistance and strength could be further improved by adding an appropriate amount of Co with the above-described Ni, Fe, and P.
According to the present invention, there is provided a copper alloy for an electric and electronic device, the copper alloy comprising: more than 2.0 mass% and 15.0 mass% or less of Zn; 0.10 mass% to 0.90 mass% of Sn; 0.05 mass% to less than 1.00 mass% of Ni; 0.001 mass% to 0.080 mass% of Fe; 0.005 mass% to 0.100 mass% of P; and the balance being Cu and unavoidable impurities, in which a ratio Fe/Ni of a Fe content to a Ni content satisfies $0.002 \leq \mathrm{Fe/Ni} < 1.500$ by atomic ratio, a ratio (Ni+Fe)/P of a total content (Ni+Fe) of Ni and Fe to a P content satisfies $3.0 < \mathrm{(Ni+Fe)/P} < 100.0$ by atomic ratio, a ratio Sn/(Ni+Fe) of a Sn content to the total content (Ni+Fe) of Ni and Fe satisfies $0.10 < \mathrm{Sn/(Ni+Fe)} < 5.00$ by atomic ratio, the H content is 10 mass ppm or less, the O content is 100 mass ppm or less,

the S content is 50 mass ppm or less, and the C content is 10 mass ppm or less.

According to the copper alloy for an electric and electronic device having the above-described configuration, Ni and Fe are added thereto together with P, and addition ratios between Sn, Ni, Fe, and P are limited, and thereby an [Ni,Fe]-P-based precipitate containing Fe, Ni, and P which is precipitated from a matrix (mainly composed of $\alpha$ phase) is present in an appropriate amount. In addition, the amounts of H, O, S, and C, which are gas impurity elements, are controlled to appropriate amounts or less. As a result, stress relaxation resistance is sufficiently superior, strength (yield strength) is high, and bendability is also superior.

Here, the [Ni,Fe]-P-based precipitate refers to a ternary precipitate of Ni-Fe-P or a binary precipitate of Fe-P or Ni-P, and may include a multi-component precipitate containing the above-described elements and other elements, for example, major components such as Cu, Zn, and Sn and impurities such as O, S, C, Co, Cr, Mo, Mn, Mg, Zr, and Ti. In addition, the [Ni,Fe]-P-based precipitate is present in the form of a phosphide or a solid-solution alloy containing phosphorus.

According to another aspect of the present invention, there is provided a copper alloy for an electric and electronic device, the copper alloy comprising: more than 2.0 mass% and 15.0 mass% or less of Zn; 0.10 mass% to 0.90 mass% of Sn; 0.05 mass% to less than 1.00 mass% of Ni; 0.001 mass% to 0.080 mass% of Fe; 0.001 mass% to less than 0.100 mass% of Co; 0.005 mass% to 0.100 mass% of P; and the balance being Cu and unavoidable impurities, in which a ratio (Fe+Co)/Ni of a total content of Fe and Co to a Ni content satisfies $0.002 \leq$ (Fe+Co)/Ni<1.500 by atomic ratio, a ratio (Ni+Fe+Co)/P of a total content (Ni+Fe+Co) of Ni, Fe, and Co to a P content satisfies 3.0<(Ni+Fe+Co)/P<100.0 by atomic ratio, a ratio Sn/(Ni+Fe+Co) of a Sn content to the total content (Ni+Fe+Co) of Ni, Fe, and Co satisfies 0.10<Sn/(Ni+Fe+Co)<5.00 by atomic ratio, the H content is 10 mass ppm or less, the O content is 100 mass ppm or less, the S content is 50 mass ppm or less, and the C content is 10 mass ppm or less.

According to the copper alloy for an electric and electronic device having the above-described configuration, Ni, Fe, and Co are added thereto together with P, and addition ratios between Sn, Ni, Fe, Co, and P are appropriately limited. As a result, an [Ni,Fe,Co]-P-based precipitate containing Fe, Ni, Co, and P which is precipitated from a matrix (mainly composed of $\alpha$ phase) is present in an appropriate amount. In addition to that, the contents of H, O, S, and C which are gas impurity elements are suppressed to be appropriate amounts or lower. Therefore, stress relaxation resistance is sufficiently superior, strength (yield strength) is high, and bendability is also superior.

Here, the [Ni,Fe,Co]-P-based precipitate refers to a quaternary precipitate of Ni-Fe-Co-P, a ternary precipitate of Ni-Fe-P, Ni-Co-P, or Fe-Co-P, or a binary precipitate of Fe-P, Ni-P, or Co-P and may include a multi-component precipitate containing the above-described elements and other elements, for example, major components such as Cu, Zn, and Sn and impurities such as O, S, C, Cr, Mo, Mn, Mg, Zr, and Ti. In addition, the [Ni,Fe,Co]-P-based precipitate is present in the form of a phosphide or an solid-solution alloy containing phosphorus.

Here, in the copper alloy for an electric and electronic device according to the present invention, it is preferable that the copper alloy has mechanical properties including a 0.2% yield strength of 300 MPa or higher.

The copper alloy for an electric and electronic device, which has mechanical properties including the 0.2% yield strength of 300 MPa or higher, is suitable for a conductive component in which high strength is particularly required, for example, a movable contact of an electromagnetic relay or a spring portion of a terminal.

According to the present invention, there is provided a copper alloy sheet for an electric and electronic device including: a rolled material formed of the above-described copper alloy for an electric and electronic device, in which a thickness is in a range of 0.05 mm to 1.0 mm.

The copper alloy sheet for an electric and electronic device having the above-described configuration can be suitably used for a connector, other terminals, a movable contact of an electromagnetic relay, or a lead frame.

Here, in the copper alloy sheet for an electric and electronic device according to the present invention, a surface may be plated with Sn.

In this case, a substrate to be plated with Sn is formed of a Cu-Zn-Sn-based alloy containing 0.10 mass% to 0.90 mass% of Sn. Therefore, a component such as a connector after use can be collected as scrap of a Sn-plated Cu-Zn alloy, and superior recycling efficiency can be secured.

According to the present invention, there is provided a conductive component for an electric and electronic device including: the above-described copper alloy for an electric and electronic device.

Further, according to another aspect of the present invention, there is provided a conductive component for an electric and electronic device including: the above-described copper alloy sheet for an electric and electronic device.

Examples of the conductive component for an electric and electronic device according to the present invention include a terminal, a connector, a relay, a lead frame, and the like.

According to the present invention, there is provided a terminal including: the above-described copper alloy for an electric and electronic device.

Further, according to still another aspect of the present invention, there is provided a terminal including: the above-described copper alloy sheet for an electric and electronic device.

Examples of the terminal according to the present invention include connector.

According to the conductive component for an electric and electronic device and the terminal having the above-described configurations, stress relaxation resistance is superior. Therefore, residual stress is not likely to be relaxed over time or in a high-temperature environment. For example, when the conductive component and the terminal have a structure of coming into press contact with an opposite-side conductive member due to the spring properties of a bent portion, the contact pressure with the opposite-side conductive member can be maintained. In addition, the thickness of the conductive component for an electric and electronic device and terminal can be reduced.

Advantageous Effects of Invention

According to the present invention, it is possible to provide a copper alloy for an electric and electronic device, a copper alloy sheet for an electric and electronic device, a conductive component for an electric and electronic device, and a terminal using the same, in which the copper alloy has reliably and sufficiently excellent stress relaxation resistance, and excellent strength and bendability.

BRIEF DESCRIPTION OF THE DRAWINGS

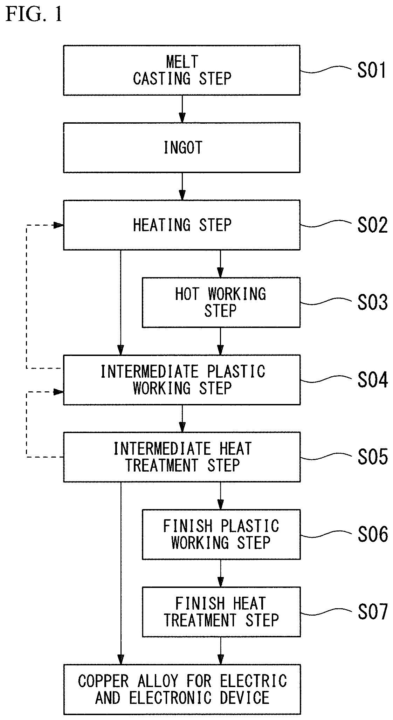

FIG. 1 is a flow chart showing a process example of a method of producing a copper alloy for an electric and electronic device according to the present invention.

DESCRIPTION OF EMBODIMENT

Hereinafter, a copper alloy for an electric and electronic device according to an embodiment of the present invention will be described.

The copper alloy for an electric and electronic device according to the embodiment has a composition comprising: more than 2.0 mass% and 15.0 mass% or less of Zn; 0.10 mass% to 0.90 mass% of Sn; 0.05 mass% to less than 1.00 mass% of Ni; 0.001 mass% to 0.080 mass% of Fe; 0.005 mass% to 0.100 mass% of P; and the balance being Cu and unavoidable impurities.

Content ratios between the respective alloy elements are determined such that a ratio Fe/Ni of a Fe content to a Ni content satisfies the following Expression (1) of $0.002 \leq Fe/Ni < 1.500$ by atomic ratio, a ratio (Ni+Fe)/P of a total content (Ni+Fe) of Ni and Fe to a P content satisfies the following Expression (2) of $3.0 < (Ni+Fe)/P < 100.0$ by atomic ratio, and a ratio Sn/(Ni+Fe) of a Sn content to the total content (Ni+Fe) of Ni and Fe satisfies the following Expression (3) of $0.10 < Sn/(Ni+Fe) < 5.00$ by atomic ratio.

Further, the copper alloy for an electric and electronic device according to the embodiment may further include 0.001 mass% to less than 0.100 mass% of Co in addition to Zn, Sn, Ni, Fe, and P described above. In this case, the Fe content is set to be in a range of 0.001 mass% or more and less than 0.100 mass%.

Content ratios between the respective alloy elements are determined such that a ratio (Fe+Co)/Ni of a total content of Fe and Co to a Ni content satisfies the following Expression (1') of $0.002 \leq (Fe+Co)/Ni < 1.500$ by atomic ratio, a ratio (Ni+Fe+Co)/P of a total content (Ni+Fe+Co) of Ni, Fe, and Co to a P content satisfies the following Expression (2') of $3.0 < (Ni+Fe+Co)/P < 100.0$ by atomic ratio, and a ratio Sn/(Ni+Fe+Co) of a Sn content to the total content (Ni+Fe+Co) of Ni, Fe, and Co satisfies the following Expression (3') of $0.10 < Sn/(Ni+Fe+Co) < 5.0$ by atomic ratio.

In the copper alloy for an electric and electronic device according to the embodiment, the amounts of H, O, S, and C, which are gas impurity elements, are determined as follows.

H: 10 mass ppm or less
O: 100 mass ppm or less
S: 50 mass ppm or less
C: 10 mass ppm or less

Here, the reasons for limiting the component composition as described above will be described.

(Zn: more than 2.0 mass% and 15.0 mass% or less)

Zn is a basic alloy element in the copper alloy, which is a target of the embodiment and is an efficient element for improving strength and spring properties. In addition, Zn is cheaper than Cu and thus has an effect of reducing the material cost of the copper alloy. When the Zn content is 2.0 mass% or less, the effect of reducing the material cost cannot be sufficiently obtained. On the other hand, when the Zn content is 23.0 mass% or more, corrosion resistance decreases, and cold workability also decreases.

Therefore, in the embodiment, the Zn content is in a range of more than 2.0 mass% and 15.0 mass% or less, and preferably in a range of 3.0 mass% or more and 15.0 mass% or less.

(Sn: 0.10 mass% to 0.90 mass%)

Addition of Sn has an effect of improving strength and is advantageous for improving the recycling efficiency of a Sn-plated Cu-Zn alloy. Further, as a result of a study by the present inventors, it was found that the presence of Sn together with Ni and Fe contributes to the improvement of stress relaxation resistance. When the Sn content is less than 0.10 mass%, the above-described effects cannot be sufficiently obtained. On the other hand, when the Sn content is more than 0.90 mass%, hot workability and cold workability decrease. Therefore, cracking may occur during hot rolling or cold rolling, and conductivity may decrease.

Therefore, in the embodiment, the Sn content is in a range of 0.10 mass% to 0.90 mass%. The Sn content is more preferably in a range of 0.20 mass% to 0.80 mass%.

(Ni: 0.05 mass% to less than 1.00 mass%)

By adding Ni together with Fe and P, a [Ni,Fe]-P-based precipitate can be precipitated from a matrix (mainly composed of $\alpha$ phase). In addition, by adding Ni together with Fe, Co, and P, a [Ni,Fe,Co]-P-based precipitate can be precipitated from a matrix (mainly composed of $\alpha$ phase). The [Ni,Fe]-P-based precipitate or the [Ni,Fe,Co]-P-based precipitate has an effect of pinning grain boundaries during recrystallization. As a result, the average grain size can be reduced, and strength, bendability, and stress corrosion cracking resistance can be improved. Further, due to the presence of the precipitate, stress relaxation resistance can be significantly improved. Further, by allowing Ni to be present together with Sn, Fe, Co, and P, stress relaxation resistance can be improved due to solid solution strengthening. Here, when the addition amount of Ni is less than 0.05 mass%, stress relaxation resistance cannot be sufficiently improved. On the other hand, when the addition amount of Ni is 1.00 mass% or more, the solid solution amount of Ni increases, and conductivity decreases. In addition, due to an increase in the amount of an expensive Ni material used, the cost increases.

Therefore, in the embodiment, the Ni content is in a range of 0.05 mass% to less than 1.00 mass%. The Ni content is more preferably in a range of 0.20 mass% to less than 0.80 mass%.

(Fe: 0.001 mass% to 0.080 mass%)

By adding Fe together with Ni and P, a [Ni,Fe]-P-based precipitate can be precipitated from a matrix (mainly composed of $\alpha$ phase). In addition, by adding Fe together with Ni, Co, and P, a [Ni,Fe,Co]-P-based precipitate can be precipitated from a matrix (mainly composed of $\alpha$ phase). The [Ni,Fe]-P-based precipitate or the [Ni,Fe,Co]-P-based precipitate has an effect of pinning grain boundaries during recrystallization. As a result, the average grain size can be reduced, and strength, bendability, and stress corrosion cracking resistance can be improved. Further, due to the presence of the precipitate, stress relaxation resistance can be significantly improved. Here, when the addition amount of Fe is less than 0.001 mass%, the effect of pinning grain boundaries cannot be sufficiently obtained, and sufficient strength cannot be obtained. On the other hand, when the addition amount of Fe is 0.100 mass% or more, further improvement of strength cannot be recognized, the solid solution amount of Fe increases, and conductivity decreases. In addition, cold workability decreases.

Therefore, in the embodiment, the Fe content is in a range of 0.001 mass% to 0.080 mass%. The Fe content is preferably in a range of 0.002 mass% to 0.080 mass%.

(Co: 0.001 mass% to less than 0.100 mass%)

Co is not an essential addition element. However, when a small amount of Co is added together with Ni, Fe, and P, a [Ni,Fe,Co]-P-based precipitate is produced, and stress relaxation resistance can be further improved. Here, when the addition amount of Co is less than 0.001 mass%, the effect of further improving stress relaxation resistance obtained by the addition of Co cannot be obtained. On the other hand, when the addition amount of Co is 0.100 mass% or more, the solid solution amount of Co increases, and conductivity decreases. In addition, due to an increase in the amount of an expensive Co material used, the cost increases.

Therefore, in the embodiment, when Co is added, the Co content is in a range of 0.001 mass% to less than 0.100 mass%. The Co content is more preferably in a range of 0.002 mass% to 0.080 mass%.

When Co is not actively added, less than 0.001 mass% of Co is contained as an impurity.

(P: 0.005 mass% to 0.100 mass%)

P has high bonding properties with Fe, Ni, and Co. When an appropriate amount of P is added together with Fe and Ni, a [Ni,Fe]-P-based precipitate can be precipitated. In addition, when an appropriate amount of P is added together with Fe, Ni, and Co, a [Ni,Fe,Co]-P-based precipitate can be precipitated. Further, due to the presence of the precipitate, stress relaxation resistance can be improved. When the P content is less than 0.005 mass%, it is difficult to precipitate a sufficient amount of the [Ni,Fe]-P-based precipitate or the [Ni,Fe,Co]-P-based precipitate, and stress relaxation resistance cannot be sufficiently improved. On the other hand, when the P content exceeds 0.100 mass%, the solid solution amount of P increases, conductivity decreases, rollability decreases, and cold rolling cracking is likely to occur.

Therefore, in the embodiment, the P content is in a range of 0.005 mass% to 0.100 mass%. The P content is more preferably in a range of 0.010 mass% to 0.080 mass%.

P is an element which is likely to be unavoidably incorporated into molten raw materials of the copper alloy. Accordingly, in order to limit the P content to be as described above, it is desirable to appropriately select the molten raw materials.

(H: 10 mass ppm or less)

H is combined with O to form steam during casting, resulting in occurrence of blowhole defects in ingots. The blowhole defects cause defects such as cracking during casting and blister and peeling during rolling. The defects such as cracking, blister, and peeling function as the starting point of fracture caused by stress concentration, and thus strength and stress corrosion cracking resistance are deteriorated. Here, when the H content is more than 10 mass ppm, the above-described blowhole defects easily occur.

In the embodiment, the H content is defined to be 10 mass ppm or less. In order to further suppress occurrence of blowhole defects, the H content is preferably 4 mass ppm or less and more preferably 2 mass ppm or less.

(O: 100 mass ppm or less)

O reacts with each component element in the copper alloy and forms oxides. The oxides acting as the starting point of fracture cause deterioration of cold rollability and bendability. In addition, when the O content is more than 100 mass ppm, O reacts with Ni, Fe, Co or the like, and as a result, sufficient [Ni,Fe]-P-based precipitates or [Ni,Fe,Co]-P-based precipitates cannot be ensured. Thus, there is a tendency to deteriorate stress relaxation resistance and mechanical properties.

In the embodiment, the O content is defined to be 100 mass ppm or less. Within the above-described range, the O content is particularly preferably 50 mass ppm or less and more preferably 20 mass ppm or less.

(S: 50 mass ppm or less)

S is present at the grain boundaries in the form of a simple substance, an intermetallic compound having a low-melting point, a complex sulfide or the like.

S, an intermetallic compound having low-melting point, and a complex sulfide present at the grain boundaries are melted during hot working to cause grain boundary cracking and thus causes working cracking. In addition, the complex sulfide acting as the starting point of fracture causes deterioration of cold rollability and bendability. Further, S reacts with Ni, Fe, Co or the like, and as a result, sufficient [Ni,Fe]-P-based precipitates or [Ni,Fe,Co]-P-based precipitates cannot be ensured. Thus, there is a tendency to deteriorate stress relaxation resistance and mechanical properties.

In the embodiment, the S content is defined to be 50 mass ppm or less. Within the above-described range, the S content is particularly preferably 40 mass ppm or less and more preferably 30 mass ppm or less.

(C: 10 mass ppm or less)

C is used to coat the surface of the molten copper alloy in melting and casting for the purpose of deoxidization for the molten copper alloy. In the copper alloy, when the C content is more than 10 mass ppm, the amount of C inclusion, complex carbides with Ni, Fe, Co or the like, or the segregation of the solid solution of C during casting is relatively increased. The C, complex carbides with Ni, Fe, Co or the like, and the segregation of the solid solution of C easily cause cracking during casting and further deteriorate cold reliability. In addition, C reacts with Ni, Fe, Co or the like and as a result, [Ni,Fe]-P-based precipitates or [Ni,Fe,Co]-P-based precipitates cannot be sufficiently ensured. Thus, there is a tendency to deteriorate stress relaxation resistance and mechanical properties.

In the embodiment, the C content is defined to be 10 mass ppm or less. Within the above-described range, the C content is preferably 5 mass ppm or less and more preferably 1 mass ppm or less.

Basically, the balance of the above-described elements is Cu and unavoidable impurities. Examples of the unavoidable impurities include Mg, Al, Mn, Si, (Co), Cr, Ag, Ca, Sr, Ba, Sc, Y, Hf, V, Nb, Ta, Mo, W, Re, Ru, Os, Se, Te, Rh, Ir, Pd, Pt, Au, Cd, Ga, In, Li, Ge, As, Sb, Ti, Tl, Pb, Bi, Be, N, Hg, B, Zr, rare earth element, and the like.

Further, in the copper alloy for an electric and electronic device according to the embodiment, it is important not only to adjust each content of the alloy elements to be in the above-described range, but also to limit the ratios between the respective content of the elements such that the above-described Expressions (1) to (3) or Expressions (1') to (3') are satisfied by atomic ratio. Therefore, the reason for limiting the ratios to satisfy Expressions (1) to (3) or Expressions (1') to (3') will be described below.

$$\text{Expression (1): } 0.002 \leq \text{Fe/Ni} < 1.500$$

As a result of a detailed experiment, the present inventors found that sufficient improvement of stress relaxation resistance can be realized not only by adjusting each content of Fe and Ni as described above but also by limiting the ratio Fe/Ni to be in a range of 0.002 to less than 1.500 by atomic ratio.

Here, when the ratio Fe/Ni is 1.500 or more, stress relaxation resistance decreases. When the ratio Fe/Ni is less than 0.002, strength decreases, and the amount of an expensive Ni material used is relatively increased, which causes an increase in cost. Therefore, the ratio Fe/Ni is limited to be in the above-described range. The Fe/Ni ratio is particularly preferably in the range of 0.005 to 1.000. The Fe/Ni ratio is more preferably in the range of 0.005 to 0.500.

$$\text{Expression (2): } 3.0 < (\text{Ni} + \text{Fe})/\text{P} < 100.0$$

When the ratio (Ni+Fe)/P is 3.0 or less, stress relaxation resistance decreases along with an increase in the ratio of solid-solution element P. Concurrently, conductivity decreases due to the solid-solution element P, rollability decreases, and thus cold rolling cracking is likely to occur. Further, bendability decreases. On the other hand, when the ratio (Ni+Fe)/P is 100.0 or more, conductivity decreases along with an increase in the ratio of solid-solution elements Ni and Fe, and the amount of an expensive Ni material used is relatively increased, which causes an increase in cost. Therefore, the ratio (Ni+Fe)/P is limited to be in the above-described range. The upper limit of the ratio (Ni+Fe)/P is 50.0 or less, preferably 40.0 or less, more preferably 20.0 or less, still more preferably less than 15.0, and most preferably 12.0 or less.

$$\text{Expression (3): } 0.10 < \text{Sn}/(\text{Ni} + \text{Fe}) < 5.00$$

When the ratio Sn/(Ni+Fe) is 0.10 or less, the effect of improving stress relaxation resistance cannot be sufficiently exhibited. On the other hand, when the ratio Sn/(Ni+Fe) is 5.00 or more, the (Ni+Fe) content is relatively decreased, the amount of a [Ni,Fe]-P-based precipitate decreases, and stress relaxation resistance decreases. Therefore, the ratio Sn/(Ni+Fe) is limited to be in the above-described range. The lower limit of the Sn/(Ni+Fe) is 0.20 or more, preferably 0.25 or more, and most preferably more than 0.30. The upper limit of the ratio Sn/(Ni+Fe) is 2.50 or less and preferably 1.50 or less.

$$\text{Expression (1'): } 0.002 \leq (\text{Fe} + \text{Co})/\text{Ni} < 1.500$$

When Co is added, it can be considered that a portion of Fe is substituted with Co, and Expression (1') basically corresponds to Expression (1). Here, when the ratio (Fe+Co)/Ni is 1.500 or more, stress relaxation resistance decreases, and the amount of an expensive Co material used increases, which causes an increase in cost. When the ratio (Fe+Co)/Ni is less than 0.002, strength decreases, and the amount of an expensive Ni material used is relatively increased, which causes an increase in cost. Therefore, the ratio (Fe+Co)/Ni is limited to be in the above-described range. The (Fe+Co)/Ni ratio is particularly preferably in a range of 0.005 to 1.000 and still more preferably in a range of 0.005 to 0.500.

$$\text{Expression (2'): } 3.0 < (\text{Ni} + \text{Fe} + \text{Co})/\text{P} < 100.0$$

Expression (2'), which expresses the case where Co is added, corresponds to Expression (2). When the ratio (Ni+Fe+Co)/P is 3.0 or less, stress relaxation resistance decreases along with an increase in the ratio of solid-solution element P. Concurrently, conductivity decreases due to the solid-solution element P, rollability decreases, and thus cold rolling cracking is likely to occur. Further, bendability decreases. On the other hand, when the ratio (Ni+Fe+Co)/P is 100.0 or more, conductivity decreases along with an increase in the ratio of solid-solution elements Ni, Fe, and Co, and the amount of an expensive Co or Ni material used is relatively increased, which causes an increase in cost. Therefore, the ratio (Ni+Fe+Co)/P is limited to be in the above-described range. The upper limit of the ratio (Ni+Fe+Co)/P is 50.0 or less, preferably 40.0 or less, more preferably 20.0 or less, still more preferably less than 15.0, and most preferably 12.0 or less.

$$\text{Expression (3'): } 0.10 < Sn/(Ni+Fe+Co) < 5.00$$

Expression (3'), which expresses the case where Co is added, corresponds to Expression (3). When the ratio Sn/(Ni+Fe+Co) is 0.10 or less, the effect of improving stress relaxation resistance cannot be sufficiently exhibited. On the other hand, when the ratio Sn/(Ni+Fe+Co) is 5.0 or more, the (Ni+Fe+Co) content is relatively decreased, the amount of a [Ni,Fe,Co]-P-based precipitate decreases, and stress relaxation resistance decreases. Therefore, the ratio Sn/(Ni+Fe+Co) is limited to be in the above-described range. The lower limit of the Sn/(Ni+Fe+Co) is 0.20 or more, preferably 0.25 or more, and most preferably more than 0.30. The upper limit of the ratio Sn/(Ni+Fe+Co) is 2.50 or less and preferably 1.50 or less.

As described above, in the copper alloy for an electric and electronic device in which not only each content of the respective alloy elements but also the ratios between the elements are adjusted so as to satisfy Expressions (1) to (3) or Expressions (1') to (3'), a [Ni,Fe]-P-based precipitate or a [Ni,Fe,Co]-P-based precipitate is dispersed and precipitated from a matrix (mainly composed of $\alpha$ phase). It is presumed that, due to the dispersion and precipitation of the precipitate, stress relaxation resistance is improved.

Further, in the copper alloy for an electric and electronic device according to the embodiment, the presence of the [Ni,Fe]-P-based precipitate or the [Ni,Fe,Co]-P-based precipitate is important. As a result of a study by the present inventors, it was found that the precipitate is a hexagonal crystal (space group:P-62 m (189)) having a $Fe_2P$-based or $Ni_2P$-based crystal structure, or a $Fe_2P$-based orthorhombic crystal (space group:P-nma (62)). It is preferable that the precipitate have a fine average grain size of 100 nm or less. Due to the presence of the precipitate having a fine grain size, superior stress relaxation resistance can be secured, and strength and bendability can be improved through grain refinement. Here, when the average grain size of the precipitate exceeds 100 nm, contribution to the improvement of strength and stress relaxation resistance decreases.

Next, a preferable example of a method of producing the above-described copper alloy for an electric and electronic device according to the embodiment will be described with reference to a flowchart shown FIG. 1.

[Melt Casting Step: S01]

First, molten copper alloy having the above-described component composition is prepared. As a copper material, 4NCu (for example, oxygen-free copper) having a purity of 99.99 mass% or higher is preferably used, and scrap may also be used as the material. In addition, for melting, an air atmosphere furnace may be used. However, in order to suppress oxidation of an addition element, an atmosphere furnace having an inert gas atmosphere or a reducing atmosphere may be used.

Next, the molten copper alloy with the components adjusted is cast into an ingot using an appropriate casting method such as a batch type casting method (for example, metal mold casting), a continuous casting method, or a semi-continuous casting method.

[Heating Step: S02]

Next, optionally, a homogenization heat treatment is performed to eliminate segregation of the ingot and homogenize the ingot structure. Alternatively, a solution heat treatment is performed to solid-solute a crystallized product or a precipitate. Heat treatment conditions are not particularly limited. Typically, heating may be performed at 600°C to 1000°C for 1 second to 24 hours. When the heat treatment temperature is lower than 600°C or when the heat treatment time is shorter than 5 minutes, a sufficient effect of homogenizing or solutionizing may not be obtained. On the other hand, when the heat treatment temperature exceeds 1000°C, a segregated portion may be partially melted. When the heat treatment time exceeds 24 hours, the cost increases. Cooling conditions after the heat treatment may be appropriately determined. Typically, water quenching may be performed. After the heat treatment, surface polishing may be performed.

[Hot Working: S03]

Next, hot working may be performed on the ingot to optimize rough processing and homogenize the structure. Hot working conditions are not particularly limited. Typically, it is preferable that the start temperature is 600°C to 1000°C, the end temperature is 300°C to 850°C, and the working ratio is about 10% to 99%. Until the start temperature of the hot working, ingot heating may be performed as the above-described heating step S02. Cooling conditions after the hot working may be appropriately determined. Typically, water quenching may be performed. After the hot working, surface polishing may be performed. A working method of the hot working is not particularly limited. In a case in which the final shape of the product is a plate or a strip, hot rolling may be applied. In addition, in a case in which the final shape of the product is a wire or a rod, extrusion or groove rolling may be applied. Further, in a case in which the final shape of the product is a bulk shape, forging or pressing may be applied.

[Intermediate Plastic Working: S04]

Next, intermediate plastic working is performed on the ingot which undergoes the homogenization treatment in the heating step S02 or the hot working material which undergoes the hot working S03 such as hot rolling. In the intermediate plastic working S04, temperature conditions are not particularly limited and are preferably in a range of -200°C to +200°C of a cold or warm working temperature. The working ratio of the intermediate plastic working is not particularly limited and is typically about 10% to 99%. An working method is not particularly limited. In a case in which the final shape of the product is a plate or a strip, rolling may be applied. In addition, in a case in which the final shape of the product is a wire or a rod, extrusion or groove rolling may be applied. Further, in a case in which the final shape of the product is a bulk shape, forging or pressing may be applied. S02 to S04 may be repeated to strictly perform solutionizing.

[Intermediate Heat Treatment Step: S05]

After the intermediate plastic working S04 at a cold or warm working temperature, an intermediate heat treatment is performed as a recrystallization treatment and a precipitation treatment. This intermediate heat treatment is performed not only to recrystallize the structure but also to disperse and precipitate a [Ni,Fe]-P-based precipitate or a [Ni,Fe,Co]-P-based precipitate. Conditions of the heating temperature and the heating time may be adopted to produce the precipitate. Typically, the conditions may be 200°C to 800°C and 1 second to 24 hours. However, the grain size affects stress relaxation resistance to some extent. Therefore, it is preferable that the grain size of crystal grains recrystallized by the intermediate heat treatment is measured to appropriately select conditions of the heating temperature and the heating time. The intermediate heat treatment and the subsequent cooling affect the final average grain size. Therefore, it is preferable that the conditions are selected such that the average grain size of the $\alpha$ phase is in a range of 0.1 $\mu$m to 50 $\mu$m.

As a specific method of the intermediate heat treatment, a method using a batch type heating furnace or a continuous heating method using a continuous annealing line may be used. When the batch type heating furnace is used, it is preferable that heating is performed at a temperature of 300°C to 800°C for 5 minutes to 24 hours. In addition, when the continuous annealing line is used, it is preferable that the heating maximum temperature is set as 250°C to 800°C, and the temperature is not kept or only kept for about 1 second to 5 minutes in the above temperature range. In addition, it is preferable that the atmosphere of the intermediate heat treatment is a non-oxidizing atmosphere (nitrogen gas atmosphere, inert gas atmosphere, reducing atmosphere).

Cooling conditions after the intermediate heat treatment are not particularly limited. Typically, cooling may be performed at a cooling rate of 2000 °C/sec to 100 °C/h.

Optionally, the intermediate plastic working S04 and the intermediate heat treatment S05 may be repeated multiple times.

[Finish Plastic Working: S06]

After the intermediate heat treatment step S05, finish working is performed to obtain a copper alloy having a final dimension (thickness, width, and length) and a final shape. The working method for the finishing plastic working is not particularly limited. In a case in which the shape of the final product is in a plate or a strip, rolling (cold rolling) may be applied. In addition, depending on the shape of the final product, forging, pressing, groove rolling, or the like may be applied. The working ratio may be appropriately selected according to the final thickness and the final shape and is preferably in a range of 1% to 99% and more preferably in a range of 1% to 70%. When the working ratio is less than 1%, an effect of improving yield strength cannot be sufficiently obtained. On the other hand, when the working ratio exceeds 70%, the recrystallized structure is lost, and a worked structure is obtained. As a result, bendability may decrease.

The working ratio is preferably 1% to 70% and more preferably 5% to 70%. After finish plastic working, the resultant may be used as a product without any change. However, typically, it is preferable that finish heat treatment is further performed.

[Finish Heat Treatment Step: S07]

After the finish plastic working, optionally, a finish heat treatment step S07 is performed to improve stress relaxation resistance and perform low-temperature annealing curing or to remove residual strain. It is preferable that this finish heat treatment is performed in a temperature range of 50°C to 800°C for 0.1 seconds to 24 hours. When the finish heat treatment temperature is lower than 50°C or when the finish heat treatment time is shorter than 0.1 seconds, a sufficient straightening effect may not be obtained. On the other hand, when the finish heat treatment temperature exceeds 800°C, recrystallization may occur. When the finish heat treatment time exceeds 24 hours, the cost increases. When the finish plastic working S06 is not performed, the finish heat treatment step S07 can be omitted from the method of producing the copper alloy.

Through the above-described steps, the copper alloy for an electric and electronic device according to the embodiment can be obtained. In the copper alloy for an electric and electronic device, the 0.2% yield strength is 300 MPa or higher.

In addition, when rolling is used as a working method, a copper alloy sheet (strip) for an electric and electronic device having a thickness of about 0.05 mm to 1.0 mm can be obtained. This sheet may be used as the conductive component for an electric and electronic device without any change. However, typically, a single surface or both surfaces of the sheet are plated with Sn to have a thickness of 0.1 $\mu$m to 10 $\mu$m, and this Sn-plated copper alloy strip is used as a conductive component for an electric and electronic device such as a connector or other terminals. In this case, a Sn-plating method is not particularly limited. In addition, in some cases, a reflow treatment may be performed after electroplating.

In the copper alloy for an electric and electronic devices having the above-described configuration, a [Ni,Fe]-P-based precipitate or a [Ni,Fe,Co]-P-based precipitate which are precipitated from a matrix (mainly composed of $\alpha$ phase) and contain Fe, Ni, and P, is appropriately present. In addition to this, the H content is defined to be 10 mass ppm or less, the O content is defined to be 100 mass ppm or less, the S content is defined to be 50 mass ppm or less, and the C content is defined to be 10 mass ppm or less, H, O, S, and C being gas impurity elements. Therefore, the deterioration of the properties caused by these gas impurity elements can be suppressed. As a result, stress relaxation resistance is sufficiently superior, strength (yield strength) is high, and bendability is also superior.

Further, the copper alloy for an electric and electronic device according to the embodiment has mechanical properties including a 0.2% yield strength of 300 MPa or higher and thus is suitable for a conductive component in which high strength is particularly required, for example, a movable contact of an electromagnetic relay or a spring portion of a terminal.

The copper alloy sheet for an electric and electronic device according to the embodiment includes a rolled material formed of the above-described copper alloy for an electric and electronic device. Therefore, the copper alloy sheet for an electric and electronic device having the above-described configuration has superior stress relaxation resistance and can be suitably used for a connector, other terminals, a movable contact of an electromagnetic relay, or a lead frame.

In addition, when the surface of the copper alloy sheet is plated with Sn, a component such as a connector after use can be collected as scrap of a Sn-plated Cu-Zn alloy, and superior recycling efficiency can be secured.

Hereinabove, the embodiment of the present invention has been described. However, the present invention is not limited to the embodiment, and appropriate modifications can be made within a range not departing from the technical scope of the present invention.

For example, the example of the production method has been described, but the present invention is not limited thereto. The production method is not particularly limited as long as a copper alloy for an electric and electronic device as a final product has a composition in the range according to the present invention, and the amounts of H, O, S, and C which are gas impurity elements are set within the scope of the present invention.

EXAMPLES

Hereinafter, the results of an experiment which were performed in order to verify the effects of the present invention will be shown as Examples of the present invention together with Comparative Examples. The following Examples are to describe the effects of the present invention, and configurations, processes, and conditions described in Examples do not limit the technical scope of the present invention.

A Cu-40% Zn master alloy in which the H content was 0.5 ppm or less, the O content was 5 ppm or less, the S content was 5 ppm or less, and the C content was 1 ppm or less, and oxygen-free copper (ASTM B152 C10100) with a purity of 99.99 mass % or more in which the H content was 1 ppm or less, the O content was 1.5 ppm or less, the S content was 5 ppm or less, and the C content was 1 ppm or less were prepared as raw material. Then, these materials were set in a crucible made of high purity alumina and melted using a high-frequency melting furnace in atmosphere of high purity Ar gas (having a dew point of -80°C or lower). When various elements were added and H and O were introduced into the molten copper alloy, the atmosphere in melting was set to an Ar-$N_2$-$H_2$ or Ar-$O_2$ mixed gas atmosphere using a high purity Ar gas (having a dew point of -80°C or lower), a high purity $N_2$ gas (having a dew point of -80°C or lower), and a high purity $O_2$ gas (having a dew point of -80°C or lower). When C was introduced into the alloy, the surface of the molten alloy in the melting was coated with C particles and the C particles were brought into contact with the molten alloy. In addition, when S was introduced into the alloy, S was added directly. Thus, molten alloys having the component compositions shown in Tables 1, 2, 3, and 4 were prepared and were poured into molds to prepare ingots. The size of the ingots was about 40 mm (thickness)×about 50 mm (width)×about 200 mm (length).

Next, each ingot was subjected to cutting and surface grinding, and then gas component analysis was performed. As a homogenization treatment (heating step S02), the ingots were held in a high purity Ar gas atmosphere at 800°C for a predetermined amount of time and then were water-quenched.

Next, hot rolling was performed as the hot working S03. Each of the ingots was reheated such that the hot rolling start temperature was 800°C, was hot-rolled at a rolling reduction of 50% such that a width direction of the ingot was a rolling direction, and was water-quenched such that the rolling end temperature was 300°C to 700°C. Next, the ingot was cut, and surface polishing was performed. As a result, a hot-rolled material having a size of about 15 mm (thickness)×about 160 mm (width)×about 100 mm (length).

Next, the intermediate plastic working S04 and the intermediate heat treatment step S05 were performed once or were repeatedly performed twice.

Specifically, when the intermediate plastic working and the intermediate heat treatment were performed once, cold rolling (intermediate plastic working) was performed at a rolling reduction of 90% or more. Next, as the intermediate heat treatment for recrystallization and precipitation treatment, a heat treatment was performed at 200°C to 800°C for a predetermined amount of time, and then water quenching was performed. After that, the rolled material was cut, and surface polishing was performed to remove an oxide film.

On the other hand, when the intermediate plastic working and the intermediate heat treatment were repeated twice, primary cold rolling (primary intermediate plastic working) was performed at a rolling reduction of about 50% to 90%. Next, as a primary intermediate heat treatment, a heat treatment was performed at 200°C to 800°C for a predetermined amount of time, and water quenching was performed. After that, secondary cold rolling (secondary intermediate plastic working) was performed at a rolling reduction of about 50% to 90%, a secondary intermediate heat treatment was performed at 200°C to 800°C for a predetermined amount of time, and then water quenching was performed. Next, the rolled material was cut, and surface polishing was performed to remove an oxide film.

After that, finish rolling was performed at a rolling reduction as shown in Tables 5, 6, 7, and 8.

Finally, a finish heat treatment was performed at 300°C to 350°C, water quenching was performed, and cutting and surface-polishing were performed. As a result, a strip for characteristic evaluation having a size of 0.25 mm (thickness) × about 160 mm (width) was prepared.

Regarding the strip for characteristic evaluation, average grain size, mechanical properties, conductivity, and stress relaxation resistance were evaluated. Test methods and measurement methods for each evaluation item are as follows, and the results thereof are shown in Tables 5, 6, 7, and 8.

[Grain Size Observation]

A surface perpendicular to the width direction of rolling, that is, a TD (transverse direction) surface was used as an observation surface. Using an EBSD measurement device and an OIM analysis software, grain boundaries and an orientation difference distribution were measured.

Mechanical polishing was performed using waterproof abrasive paper and diamond abrasive grains, and finish polishing was performed using a colloidal silica solution. Using an EBSD measurement device (QUANTA FEG 450 manufactured by FEI Company, OIM DATA COLLECTION manufactured by EDAX/TSL (at present, AMETEK Inc.)) and an analysis software (OIM DATA ANALYSIS Ver. 5.3 manufactured by EDAX/TSL (at present, AMETEK Inc.)), an orientation differences between crystal grains was analyzed under conditions of an acceleration voltage of electron beams of 20 kV, a measurement interval of 0.1 $\mu$m step, and a measurement area of 1000 $\mu$m$^2$ or more. CI values of the measurement points were calculated from the analysis software OIM, and CI values of 0.1 or less were excluded by the analysis of the grain size. Grain boundaries were divided into a high-angle grain boundary and a low-angle grain boundary, in which, as a result of two-dimensional cross-sectional observation, the high-angle grain boundary had an orientation difference of 15° or more between two adjacent crystal grains, and the low-angle grain boundary had an orientation difference of 2° to 15° between two adjacent crystal grains. Using the high-angle grain boundary, a grain boundary map was created. Five line segments having predetermined horizontal and vertical lengths were drawn in the image according to a cutting method of JIS H 0501:1986 (corresponding to ISO 2624:1973), the number of crystal grains which were completely cut was counted, and the average value of the cut lengths thereof was calculated as the average grain size.

In the examples, the average grain diameter defines the grains in $\alpha$ phase. In the above-described measurement of the average grain diameter, crystals in phases other than $\alpha$ phase, such as $\beta$ phase, rarely existed. When such grains existed, the grains were excluded in the calculation of the average grain diameter.

[Mechanical Properties]

A No. 13B specified in JIS Z 2241:2011 (based on ISO 6892-1:2009) was collected from the strip for characteristic evaluation, and the 0.2% yield strength $\sigma_{0.2}$ using an offset method according to JIS Z 2241. The specimen was collected such that a tensile direction of a tensile test was perpendicular to the rolling direction of the strip for characteristic evaluation.

[Conductivity]

A specimen having a size of 10 mm (width)×60 mm (length) was collected from the strip for characteristic evaluation, and the electrical resistance thereof was obtained using a four-terminal method. In addition, using a micrometer, the size of the specimen was measured, and the volume of the specimen was calculated. The conductivity was calculated from the measured electrical resistance and the volume. The specimen was collected such that a longitudinal direction thereof was parallel to the rolling direction of the strip for characteristic evaluation.

[Bendability]

Bending was performed according to a test method of JCBA (Japan Copper and Brass Association) T307-2007-4. W bending was performed such that a bending axis was parallel to a rolling direction. Multiple specimens having a size of 10 mm (width)×30 mm (length)×0.25 mm (thickness) were collected from the strip for characteristic evaluation. Next, a W-bending test was performed using a W-shaped jig having a bending angle of 90° and a bending radius of 0.25 mm by putting a W-shaped upper die of the jig on the specimen placed on a W-shaped lower die of the jig to apply a load thereto. A cracking test was performed using three samples. A case where no cracks were observed in four visual fields of each sample was evaluated as "O", and a case where cracks were observed in one or more visual fields of each sample was evaluated as "X".

[Stress Relaxation Resistance]

In a stress relaxation resistance test, using a method of applying a displacement to a free end of a specimen with one end supported as a fixed end, a stress was applied to the specimen, the specimen was held under the following conditions (temperature and time), and then a residual stress ratio thereof was measured, the method being specified in a cantilever screw method of JCBA (Japan Copper and Brass Association)-T309:2004.

In the test method, a specimen (width: 10 mm) was collected from each of the strips for characteristic evaluation in a direction perpendicular to the rolling direction. An initial deflection displacement was set as 2 mm, and the span length was adjusted such that a surface maximum stress of the specimen was 80% of the yield strength. The surface maximum stress was determined from the following expression.

$$\text{Surface Maximum Stress (MPa)} = 1.5\, E t \delta_0 / L_s^2$$

(wherein E: deflection coefficient (MPa), t: thickness of sample (t=0.25 mm), $\delta_0$: initial deflection displacement (2 mm), $L_s$: span length (mm))

In the evaluation of stress relaxation resistance, with respect to the test piece in which the amount of Zn was more than 2.0 mass% and less than 15.0 mass% (test piece of which the results is filled in column labeled as "2-15 Zn Evaluation" in Tables 5, 6, 7 and 8), the residual stress rate was measured from the bent portion after the test piece was held for 1,000 hours at a temperature of 150°C to evaluate stress relaxation resistance. The residual stress ratio was calculated using the following expression.

$$\text{Residual Stress Ratio (\%)} = (1 - \delta_t / \delta_0) \times 100$$

(wherein $\delta_t$: permanent deflection displacement (mm) after holding at 120°C or 150°C for 1000 h - permanent deflection displacement (mm) after holding at room temperature for 24 h, $\delta_0$: initial deflection displacement (mm))

A case where the residual stress ratio was 70% or more was evaluated as "O", and a case where the residual stress ratio was less than 70% was evaluated as "X".

Nos. 1 to 16, No. 55, and No. 62 are Reference Examples in which a Cu-20 Zn alloy containing about 20.0 mass% of Zn was based, No. 17 and No. 61 are Reference Examples in which a Cu-15 Zn alloy containing about 15.0 mass% of Zn was based, Nos. 18 to 35, Nos. 51 to 53, and Nos. 56 to 59 are Examples of the present invention and Reference Examples in which a Cu-10 Zn alloy containing about 10.0 mass% of Zn was based, Nos. 36 to 49 are Examples of the present invention and Reference Examples in which a Cu-5 Zn alloy containing about 5.0 mass% of Zn was based, and No. 50, No. 54, and No. 60 are Examples of the present invention in which a Cu-3 Zn alloy containing about 3.0 mass% of Zn was based.

In addition, No. 101 is Comparative Example in which Zn content exceeded the upper limit of range of the present invention, Nos. 102 and 103 are Comparative Examples in which a Cu-20 Zn alloy containing about 20.0 mass% of Zn was based, Nos. 104 and 105 are Comparative Examples in which a Cu-15 Zn alloy containing about 15.0 mass% of Zn was based, and Nos. 106 to 109 are Comparative Examples in which a Cu-10 Zn alloy containing about 10.0 mass% of Zn was based.

[Table 1]

| | [Examples of Present Invention] | | | | | | | | | | | | | |
|---|---|---|---|---|---|---|---|---|---|---|---|---|---|---|
| | Alloy Component Composition | | | | | | | | | | | Atomic Ratios of Alloy Elements | | |
| No. | Addition Elements (mass%) | | | | | | Gas Impurity (mass ppm) | | | | Cu | Atomic Ratio (Fe+Co)/Ni | Atomic Ratio (Ni+Fe+Co)/P | Atomic Ratio Sn/(Ni+Fe+Co) |
| | Zn | Sn | Ni | Fe | P | Co | H | O | S | C | | | | |
| 1* | 20.4 | 0.61 | 0.58 | 0.021 | 0.047 | - | 0.5 | 3 | 4 | 0.5 | Balance | 0.038 | 6.8 | 0.50 |
| 2* | 20.9 | 0.53 | 0.57 | 0.018 | 0.043 | - | 3.5 | 3 | 12 | 0.4 | Balance | 0.033 | 7.2 | 0.44 |
| 3* | 20.1 | 0.48 | 0.49 | 0.009 | 0.049 | - | 1.0 | 46 | 3 | 0.7 | Balance | 0.019 | 5.4 | 0.48 |
| 4* | 19.4 | 0.59 | 0.53 | 0.028 | 0.048 | - | 0.1 | 3 | 47 | 0.6 | Balance | 0.056 | 6.2 | 0.52 |
| 5* | 20.5 | 0.61 | 0.44 | 0.010 | 0.052 | - | 0.4 | 4 | 3 | 4.6 | Balance | 0.024 | 4.6 | 0.67 |
| 6* | 22.1 | 0.63 | 0.28 | 0.025 | 0.047 | - | 0.9 | 19 | 5 | 0.5 | Balance | 0.094 | 3.4 | 1.02 |
| 7* | 19.5 | 0.56 | 0.87 | 0.022 | 0.055 | - | 0.3 | 4 | 4 | 0.3 | Balance | 0.027 | 8.6 | 0.31 |
| 8* | 19.9 | 0.47 | 0.62 | 0.008 | 0.049 | - | 0.9 | 3 | 3 | 0.6 | Balance | 0.014 | 6.8 | 0.37 |
| 9* | 20.1 | 0.59 | 0.51 | 0.072 | 0.057 | - | 0.6 | 3 | 5 | 0.8 | Balance | 0.148 | 5.4 | 0.50 |
| 10* | 19.1 | 0.62 | 0.66 | 0.008 | 0.030 | - | 0.4 | 3 | 6 | 0.6 | Balance | 0.013 | 11.8 | 0.46 |
| 11* | 19.5 | 0.54 | 0.61 | 0.041 | 0.078 | - | 0.5 | 3 | 3 | 0.8 | Balance | 0.071 | 4.4 | 0.41 |
| 12* | 20.1 | 0.49 | 0.53 | 0.026 | 0.044 | 0.041 | 0.7 | 4 | 3 | 0.4 | Balance | 0.129 | 7.2 | 0.41 |
| 13* | 20.2 | 0.64 | 0.46 | 0.001 | 0.063 | - | 0.6 | 3 | 5 | 0.5 | Balance | 0.002 | 3.9 | 0.69 |
| 14* | 20.7 | 0.57 | 0.49 | 0.002 | 0.049 | - | 0.4 | 3 | 6 | 0.6 | Balance | 0.004 | 5.3 | 0.57 |
| 15* | 21.6 | 0.51 | 0.59 | 0.001 | 0.056 | 0.001 | 0.5 | 3 | 3 | 0.6 | Balance | 0.003 | 5.6 | 0.43 |
| 16* | 17.2 | 0.53 | 0.69 | 0.002 | 0.054 | 0.002 | 0.7 | 4 | 3 | 0.6 | Balance | 0.006 | 6.8 | 0.38 |
| 17* | 15.5 | 0.63 | 0.56 | 0.044 | 0.052 | - | 0.6 | 3 | 3 | 0.7 | Balance | 0.083 | 6.2 | 0.51 |
| 18 | 9.2 | 0.57 | 0.54 | 0.043 | 0.054 | - | 0.8 | 3 | 5 | 0.6 | Balance | 0.084 | 5.7 | 0.48 |
| 19 | 12.1 | 0.55 | 0.49 | 0.013 | 0.052 | - | 8.3 | 3 | 15 | 0.3 | Balance | 0.028 | 5.1 | 0.54 |
| 20 | 9.7 | 0.59 | 0.59 | 0.043 | 0.048 | - | 1.3 | 45 | 3 | 0.8 | Balance | 0.077 | 7.0 | 0.46 |
| 21 | 9.5 | 0.58 | 0.53 | 0.032 | 0.054 | - | 0.4 | 3 | 34 | 0.6 | Balance | 0.063 | 5.5 | 0.51 |
| 22 | 9.2 | 0.53 | 0.54 | 0.026 | 0.044 | - | 0.4 | 4 | 3 | 4.8 | Balance | 0.051 | 6.8 | 0.46 |

(continued)

| | [Examples of Present Invention] | | | | | | | | | | | | | |
|---|---|---|---|---|---|---|---|---|---|---|---|---|---|---|
| | Alloy Component Composition | | | | | | | | | | | Atomic Ratios of Alloy Elements | | |
| No. | Addition Elements (mass%) | | | | | | Gas Impurity (mass ppm) | | | | Cu | Atomic Ratio (Fe+Co)/Ni | Atomic Ratio (Ni+Fe+Co)/P | Atomic Ratio Sn/(Ni+Fe+Co) |
| | Zn | Sn | Ni | Fe | P | Co | H | O | S | C | | | | |
| 23 | 9.8 | 0.22 | 0.31 | 0.020 | 0.055 | - | 0.4 | 4 | 4 | 0.4 | Balance | 0.068 | 3.2 | 0.33 |
| 24 | 10.0 | 0.88 | 0.49 | 0.033 | 0.049 | - | 0.5 | 3 | 4 | 0.8 | Balance | 0.071 | 5.7 | 0.83 |
| 25 | 11.4 | 0.68 | 0.17 | 0.053 | 0.037 | - | 0.4 | 4 | 2 | 0.4 | Balance | 0.328 | 3.2 | 1.49 |

[Table 2]

| | Alloy Component Composition | | | | | | | | | | | Atomic Ratios of Alloy Elements | | |
|---|---|---|---|---|---|---|---|---|---|---|---|---|---|---|
| No. | Addition Elements (mass%) | | | | | | Gas Impurity (mass ppm) | | | | Cu | Atomic Ratio (Fe+Co)/Ni | Atomic Ratio (Ni+Fe+Co)/P | Atomic Ratio Sn/ (Ni+Fe+Co) |
| | Zn | Sn | Ni | Fe | P | Co | H | O | S | C | | | | |
| 26 | 10.3 | 0.61 | 0.79 | 0.034 | 0.069 | - | 0.2 | 3 | 3 | 0.4 | Balance | 0.045 | 6.3 | 0.37 |
| 27 | 9.5 | 0.54 | 0.62 | 0.009 | 0.044 | - | 0.6 | 4 | 3 | 0.6 | Balance | 0.015 | 7.5 | 0.42 |
| 28* | 10.3 | 0.65 | 0.47 | 0.095 | 0.061 | - | 0.5 | 17 | 5 | 0.6 | Balance | 0.212 | 4.9 | 0.56 |
| 29 | 10.1 | 0.63 | 0.54 | 0.008 | 0.025 | - | 0.9 | 4 | 6 | 0.7 | Balance | 0.016 | 11.6 | 0.57 |
| 30 | 10.4 | 0.62 | 0.72 | 0.051 | 0.079 | - | 0.4 | 4 | 4 | 0.7 | Balance | 0.074 | 5.2 | 0.40 |
| 31 | 9.3 | 0.56 | 0.47 | 0.003 | 0.045 | 0.056 | 0.3 | 4 | 2 | 0.4 | Balance | 0.125 | 6.2 | 0.52 |
| 32 | 8.6 | 0.62 | 0.49 | 0.001 | 0.050 | - | 0.6 | 3 | 5 | 0.8 | Balance | 0.002 | 5.2 | 0.62 |
| 33 | 9.5 | 0.63 | 0.70 | 0.002 | 0.052 | - | 0.4 | 3 | 6 | 0.6 | Balance | 0.003 | 7.1 | 0.44 |
| 34 | 8.5 | 0.57 | 0.62 | 0.001 | 0.051 | 0.001 | 0.5 | 3 | 3 | 0.4 | Balance | 0.003 | 6.4 | 0.45 |
| 35 | 9.0 | 0.55 | 0.63 | 0.002 | 0.057 | 0.002 | 0.7 | 4 | 3 | 0.5 | Balance | 0.006 | 5.9 | 0.43 |
| 36 | 5.3 | 0.61 | 0.54 | 0.041 | 0.055 | - | 0.4 | 4 | 3 | 0.7 | Balance | 0.080 | 5.6 | 0.52 |
| 37 | 4.6 | 0.59 | 0.54 | 0.032 | 0.059 | - | 7.1 | 4 | 11 | 0.6 | Balance | 0.062 | 5.1 | 0.51 |
| 38 | 4.7 | 0.55 | 0.44 | 0.018 | 0.044 | - | 2.4 | 95 | 6 | 0.4 | Balance | 0.043 | 5.5 | 0.59 |
| 39 | 5.2 | 0.57 | 0.56 | 0.043 | 0.047 | - | 0.6 | 4 | 45 | 0.7 | Balance | 0.081 | 6.8 | 0.47 |
| 40 | 6.5 | 0.64 | 0.51 | 0.047 | 0.053 | - | 0.5 | 4 | 2 | 4.9 | Balance | 0.097 | 5.6 | 0.57 |
| 41 | 5.4 | 0.29 | 0.40 | 0.029 | 0.057 | - | 0.4 | 4 | 6 | 0.6 | Balance | 0.076 | 4.0 | 0.33 |
| 42 | 4.9 | 0.71 | 0.43 | 0.065 | 0.069 | - | 0.4 | 18 | 5 | 0.4 | Balance | 0.159 | 3.8 | 0.70 |
| 43* | 4.2 | 0.89 | 0.11 | 0.089 | 0.035 | - | 0.4 | 3 | 3 | 0.4 | Balance | 0.850 | 3.1 | 2.16 |
| 44* | 5.1 | 0.68 | 0.87 | 0.087 | 0.046 | - | 0.5 | 4 | 5 | 0.7 | Balance | 0.105 | 11.0 | 0.35 |
| 45 | 3.9 | 0.45 | 0.58 | 0.006 | 0.046 | - | 0.4 | 4 | 4 | 0.5 | Balance | 0.011 | 6.7 | 0.38 |
| 46 | 5.1 | 0.55 | 0.54 | 0.071 | 0.059 | - | 0.7 | 3 | 5 | 0.6 | Balance | 0.138 | 5.5 | 0.44 |
| 47 | 4.6 | 0.59 | 0.51 | 0.005 | 0.022 | - | 0.4 | 3 | 5 | 0.5 | Balance | 0.010 | 12.4 | 0.57 |

[Examples of Present Invention]

(continued)

| [Examples of Present Invention] | | | | | | | | | | | | | | |
|---|---|---|---|---|---|---|---|---|---|---|---|---|---|---|
| | Alloy Component Composition | | | | | | | | | | | Atomic Ratios of Alloy Elements | | |
| No. | Addition Elements (mass%) | | | | | | Gas Impurity (mass ppm) | | | | Cu | Atomic Ratio (Fe+Co)/Ni | Atomic Ratio (Ni+Fe+Co)/P | Atomic Ratio Sn/ (Ni+Fe+Co) |
| | Zn | Sn | Ni | Fe | P | Co | H | O | S | C | | | | |
| 48 | 5.3 | 0.56 | 0.59 | 0.041 | 0.080 | - | 0.5 | 3 | 6 | 0.6 | Balance | 0.073 | 4.2 | 0.44 |
| 49 | 4.9 | 0.53 | 0.49 | 0.018 | 0.047 | 0.032 | 0.8 | 3 | 5 | 0.5 | Balance | 0.104 | 6.1 | 0.48 |
| 50 | 2.9 | 0.65 | 0.55 | 0.056 | 0.058 | - | 0.8 | 4 | 5 | 0.5 | Balance | 0.107 | 5.5 | 0.53 |
| * Reference Example | | | | | | | | | | | | | | |

[Table 3]

| [Examples of Present Invention] | | | | | | | | | | | | | | |
|---|---|---|---|---|---|---|---|---|---|---|---|---|---|---|
| No. | Alloy Component Composition | | | | | | | | | | | Atomic Ratios of Alloy Elements | | |
| | Addition Elements (mass%) | | | | | | Gas Impurity (mass ppm) | | | | Cu | Atomic Ratio (Fe+Co)/Ni | Atomic Ratio (Ni+Fe+Co)/P | Atomic Ratio Sn/(Ni+Fe+Co) |
| | Zn | Sn | Ni | Fe | P | Co | H | O | S | C | | | | |
| 51 | 12.6 | 0.71 | 0.88 | 0.025 | 0.005 | - | 0.4 | 2 | 7 | 0.5 | Balance | 0.030 | 95.6 | 0.39 |
| 52 | 10.2 | 0.65 | 0.85 | 0.019 | 0.011 | - | 0.5 | 4 | 6 | 0.5 | Balance | 0.023 | 41.7 | 0.37 |
| 53 | 9.8 | 0.62 | 0.92 | 0.016 | 0.018 | - | 0.4 | 5 | 5 | 0.5 | Balance | 0.018 | 27.5 | 0.33 |
| 54 | 3.9 | 0.66 | 0.99 | 0.009 | 0.006 | 0.012 | 0.4 | 5 | 4 | 0.5 | Balance | 0.022 | 89.0 | 0.32 |
| 55* | 20.8 | 0.61 | 0.94 | 0.022 | 0.012 | 0.002 | 0.7 | 3 | 4 | 0.5 | Balance | 0.027 | 42.4 | 0.31 |
| 56 | 9.9 | 0.54 | 0.67 | 0.010 | 0.019 | 0.031 | 0.6 | 4 | 4 | 0.3 | Balance | 0.062 | 19.8 | 0.38 |
| 57 | 10.5 | 0.19 | 0.80 | 0.021 | 0.037 | - | 0.4 | 6 | 5 | 0.3 | Balance | 0.028 | 11.7 | 0.11 |
| 58 | 10.3 | 0.26 | 0.59 | 0.015 | 0.035 | - | 0.5 | 3 | 4 | 0.5 | Balance | 0.027 | 9.1 | 0.21 |
| 59 | 11.0 | 0.30 | 0.58 | 0.014 | 0.041 | - | 0.4 | 4 | 4 | 0.5 | Balance | 0.025 | 7.7 | 0.25 |
| 60 | 2.8 | 0.20 | 0.77 | 0.019 | 0.037 | 0.024 | 0.5 | 5 | 3 | 0.4 | Balance | 0.057 | 11.6 | 0.12 |
| 61* | 15.4 | 0.26 | 0.57 | 0.007 | 0.031 | 0.041 | 0.3 | 4 | 5 | 0.5 | Balance | 0.085 | 10.5 | 0.21 |
| 62* | 20.1 | 0.31 | 0.57 | 0.024 | 0.024 | 0.033 | 0.4 | 4 | 5 | 0.4 | Balance | 0.102 | 13.8 | 0.24 |
| * Reference Example | | | | | | | | | | | | | | |

[Table 4]

| | Alloy Component Composition | | | | | | | | | | | Atomic Ratios of Alloy Elements | | |
| No. | Addition Elements (mass%) | | | | | | Gas Impurity (mass ppm) | | | | Cu | Atomic Ratio (Fe+Co)/Ni | Atomic Ratio (Ni+Fe+Co)/P | Atomic Ratio Sn/(Ni+Fe+Co) |
| | Zn | Sn | Ni | Fe | P | Co | H | O | S | C | | | | |
| 51 | 28.9 | - | - | - | - | - | 0.8 | 3 | 12 | 0.7 | Balance | - | - | - |
| 52 | 20.1 | 1.10 | - | - | - | - | 0.6 | 4 | 5 | 0.5 | Balance | - | - | - |
| 53 | 19.4 | - | 1.20 | - | - | - | 0.7 | 4 | 5 | 0.5 | Balance | 0.000 | - | 0.00 |
| 54 | 14.8 | - | - | - | 0.004 | - | 0.5 | 3 | 4 | 0.8 | Balance | - | 0.0 | - |
| 55 | 12.9 | - | - | 0.001 | - | - | 0.6 | 4 | 4 | 1.5 | Balance | - | - | 0.00 |
| 56 | 9.3 | 0.63 | 0.43 | 0.012 | 0.054 | - | 17 | 25 | 12 | 3.2 | Balance | 0.029 | 4.3 | 0.70 |
| 57 | 8.4 | 0.54 | 0.51 | 0.031 | 0.054 | - | 1.5 | 150 | 10 | 3.5 | Balance | 0.064 | 5.3 | 0.49 |
| 58 | 8.9 | 0.59 | 0.54 | 0.035 | 0.048 | - | 2.2 | 21 | 110 | 4.9 | Balance | 0.068 | 6.3 | 0.51 |
| 59 | 7.8 | 0.62 | 0.52 | 0.045 | 0.061 | - | 0.5 | 2 | 3 | 15 | Balance | 0.091 | 4.9 | 0.54 |

[Table 5]

| | [Examples of Present Invention] | | | | | | | | | |
|---|---|---|---|---|---|---|---|---|---|---|
| No. | Steps | | | | Evaluation | | | | | |
| | Homogenization Temperature (°C) | Hot Rolling Start Temperature (°C) | Finish Rolling Reduction (%) | Finish Heat Treatment Temperature (°C) | Grain Size (μm) | Conductivity (%IACS) | Yield Strength (MPa) | Bendability | Stress Relaxation Resistance | |
| | | | | | | | | | 2-15 Zn Evaluation | 15-23 Zn Evaluation |
| 1* | 800 | 800 | 25 | 300 | 1.8 | 24 | 601 | ○ | - | ○ |
| 2* | 800 | 800 | 26 | 300 | 1.9 | 24 | 575 | ○ | - | ○ |
| 3* | 800 | 800 | 24 | 350 | 2.0 | 24 | 562 | ○ | - | ○ |
| 4* | 800 | 800 | 28 | 350 | 1.9 | 23 | 574 | ○ | - | ○ |
| 5* | 800 | 800 | 27 | 300 | 2.2 | 24 | 578 | ○ | - | ○ |
| 6* | 800 | 800 | 25 | 300 | 2.0 | 24 | 579 | ○ | - | ○ |
| 7* | 800 | 800 | 35 | 350 | 1.8 | 23 | 592 | ○ | - | ○ |
| 8* | 800 | 800 | 29 | 350 | 1.9 | 24 | 586 | ○ | - | ○ |
| 9* | 800 | 800 | 32 | 300 | 1.6 | 22 | 605 | ○ | - | ○ |
| 10* | 800 | 800 | 36 | 300 | 1.9 | 24 | 582 | ○ | - | ○ |
| 11* | 800 | 800 | 33 | 300 | 2.1 | 21 | 590 | ○ | - | ○ |
| 12* | 800 | 800 | 27 | 300 | 1.7 | 23 | 585 | ○ | - | ○ |
| 13* | 800 | 800 | 32 | 300 | 1.8 | 23 | 576 | ○ | - | ○ |
| 14* | 800 | 800 | 30 | 300 | 1.9 | 24 | 582 | ○ | - | ○ |
| 15* | 800 | 800 | 31 | 300 | 2.0 | 23 | 572 | ○ | - | ○ |
| 16* | 800 | 800 | 26 | 300 | 1.9 | 23 | 575 | ○ | - | ○ |
| 17* | 800 | 800 | 46 | 350 | 1.4 | 25 | 577 | ○ | - | ○ |
| 18 | 800 | 800 | 55 | 350 | 1.5 | 31 | 565 | ○ | ○ | - |
| 19 | 800 | 800 | 52 | 350 | 1.4 | 31 | 516 | ○ | ○ | - |
| 20 | 800 | 800 | 53 | 350 | 1.4 | 28 | 522 | ○ | ○ | - |
| 21 | 800 | 800 | 52 | 350 | 1.5 | 29 | 519 | ○ | ○ | - |

(continued)

| | [Examples of Present Invention] | | | | | | | | | |
|---|---|---|---|---|---|---|---|---|---|---|
| | Steps | | | | Evaluation | | | | | |
| No. | Homogenization Temperature (°C) | Hot Rolling Start Temperature (°C) | Finish Rolling Reduction (%) | Finish Heat Treatment Temperature (°C) | Grain Size ($\mu$m) | Conductivity (%IACS) | Yield Strength (MPa) | Bendability | Stress Relaxation Resistance | |
| | | | | | | | | | 2-15 Zn Evaluation | 15-23 Zn Evaluation |
| 22 | 800 | 800 | 54 | 350 | 1.5 | 30 | 518 | ○ | ○ | - |
| 23 | 800 | 800 | 50 | 350 | 2.1 | 32 | 502 | ○ | ○ | - |
| 24 | 800 | 800 | 53 | 350 | 1.8 | 26 | 575 | ○ | ○ | - |
| 25 | 800 | 800 | 49 | 350 | 1.6 | 30 | 539 | ○ | ○ | - |
| * Reference Example | | | | | | | | | | |

EP 2 940 165 B1

[Table 6]

| | | Steps | | | Evaluation | | | | | |
|---|---|---|---|---|---|---|---|---|---|---|
| No. | Homogenization Temperature (°C) | Hot Rolling Start Temperature (°C) | Finish Rolling Reduction (%) | Finish Heat Treatment Temperature (°C) | Grain Size (μm) | Conductivity (%IACS) | Yield Strength (MPa) | Bendability | Stress Relaxation Resistance | |
| | | | | | | | | | 2-15 Zn Evaluation | 15-23 Zn Evaluation |
| 26 | 800 | 800 | 54 | 350 | 1.8 | 27 | 571 | ○ | ○ | - |
| 27 | 800 | 800 | 55 | 350 | 1.6 | 31 | 564 | ○ | ○ | - |
| 28* | 800 | 800 | 54 | 350 | 1.4 | 23 | 565 | ○ | ○ | - |
| 29 | 800 | 800 | 56 | 350 | 1.9 | 24 | 559 | ○ | ○ | - |
| 30 | 800 | 800 | 51 | 350 | 1.7 | 26 | 561 | ○ | ○ | - |
| 31 | 800 | 800 | 50 | 350 | 1.9 | 30 | 563 | ○ | ○ | - |
| 32 | 800 | 800 | 54 | 350 | 2.4 | 22 | 538 | ○ | ○ | - |
| 33 | 800 | 800 | 51 | 350 | 2.2 | 24 | 537 | ○ | ○ | - |
| 34 | 800 | 800 | 56 | 350 | 2.1 | 21 | 545 | ○ | ○ | - |
| 35 | 800 | 800 | 56 | 350 | 2.6 | 23 | 543 | ○ | ○ | - |
| 36 | 800 | 800 | 68 | 300 | 1.4 | 32 | 530 | ○ | ○ | - |
| 37 | 800 | 800 | 52 | 300 | 1.8 | 31 | 484 | ○ | ○ | - |
| 38 | 800 | 800 | 51 | 300 | 1.7 | 34 | 493 | ○ | ○ | - |
| 39 | 800 | 800 | 53 | 300 | 1.5 | 32 | 495 | ○ | ○ | - |
| 40 | 800 | 800 | 52 | 300 | 1.7 | 32 | 490 | ○ | ○ | - |
| 41 | 800 | 800 | 57 | 300 | 2.0 | 35 | 501 | ○ | ○ | - |
| 42 | 800 | 800 | 60 | 300 | 1.6 | 30 | 504 | ○ | ○ | - |
| 43* | 800 | 800 | 61 | 300 | 2.0 | 36 | 498 | ○ | ○ | - |
| 44* | 800 | 800 | 64 | 300 | 1.7 | 28 | 497 | ○ | ○ | - |
| 45 | 800 | 800 | 59 | 300 | 2.0 | 36 | 508 | ○ | ○ | - |
| 46 | 800 | 800 | 59 | 300 | 1.9 | 31 | 505 | ○ | ○ | - |

[Examples of Present Invention]

23

(continued)

| | Steps | | | | Evaluation | | | | Stress Relaxation Resistance | |
|---|---|---|---|---|---|---|---|---|---|---|
| [Examples of Present Invention] | | | | | | | | | | |
| No. | Homogenization Temperature (°C) | Hot Rolling Start Temperature (°C) | Finish Rolling Reduction (%) | Finish Heat Treatment Temperature (°C) | Grain Size (μm) | Conductivity (%IACS) | Yield Strength (MPa) | Bendability | 2-15 Zn Evaluation | 15-23 Zn Evaluation |
| 47 | 800 | 800 | 58 | 300 | 2.0 | 36 | 497 | ○ | ○ | - |
| 48 | 800 | 800 | 63 | 300 | 1.6 | 30 | 496 | ○ | ○ | - |
| 49 | 800 | 800 | 59 | 300 | 1.9 | 32 | 503 | ○ | ○ | - |
| 50 | 800 | 800 | 68 | 300 | 1.9 | 35 | 509 | ○ | ○ | - |

* Reference Example

[Table 7]

[Examples of Present Invention]

| No. | Steps | | | | Grain Size (μm) | Conductivity (%IACS) | Evaluation | | | |
| --- | --- | --- | --- | --- | --- | --- | --- | --- | --- | --- |
| | Homogenization Temperature (°C) | Hot Rolling Start Temperature (°C) | Finish Rolling Reduction (%) | Finish Heat Treatment Temperature (°C) | | | Yield Strength (MPa) | Bendability | Stress Relaxation Resistance | |
| | | | | | | | | | 2-15 Zn Evaluation | 15-23 Zn Evaluation |
| 51 | 800 | 800 | 55 | 350 | 4.9 | 25 | 501 | O | O | - |
| 52 | 800 | 800 | 59 | 350 | 3.8 | 26 | 506 | O | O | - |
| 53 | 800 | 800 | 56 | 350 | 3.2 | 26 | 513 | O | O | - |
| 54 | 800 | 800 | 68 | 325 | 5.1 | 33 | 475 | O | O | - |
| 55* | 800 | 800 | 31 | 350 | 4.2 | 22 | 521 | O | - | O |
| 56 | 800 | 800 | 60 | 350 | 3.4 | 27 | 517 | O | O | - |
| 57 | 800 | 800 | 57 | 350 | 5.9 | 28 | 501 | O | O | - |
| 58 | 800 | 800 | 56 | 350 | 4.7 | 32 | 505 | O | O | - |
| 59 | 800 | 800 | 61 | 350 | 4.1 | 30 | 511 | O | O | - |
| 60 | 800 | 800 | 69 | 350 | 6.1 | 38 | 465 | O | O | - |
| 61* | 800 | 800 | 41 | 350 | 3.8 | 27 | 532 | O | - | O |
| 62* | 800 | 800 | 32 | 350 | 3.5 | 23 | 554 | O | - | O |

* Reference Example

[Table 8]

| | Steps | | | | Evaluation | | | | | |
|---|---|---|---|---|---|---|---|---|---|---|
| No. | Homogenization Temperature (°C) | Hot Rolling Start Temperature (°C) | Finish Rolling Reduction (%) | Finish Heat Treatment Temperature (°C) | Grain Size (μm) | Conductivity (%IACS) | Yield Strength (MPa) | Bendability | Stress Relaxation Resistance | |
| | | | | | | | | | 2-15 Zn Evaluation | 15-23 Zn Evaluation |
| 51 | 800 | 800 | 29 | 300 | 2.3 | 24 | 531 | ○ | - | X |
| 52 | 800 | 800 | 19 | 300 | 5.8 | 26 | 517 | ○ | - | X |
| 53 | 800 | 800 | 26 | 300 | 5.4 | 27 | 481 | ○ | - | X |
| 54 | 800 | 800 | 53 | 300 | 3.4 | 37 | 467 | ○ | X | - |
| 55 | 800 | 800 | 21 | 300 | 4.7 | 39 | 451 | ○ | X | - |
| 56 | 800 | - | - | - | - | - | - | - | - | - |
| 57 | 800 | 800 | 51 | 350 | 2.3 | - | - | - | - | - |
| 58 | 800 | 800 | - | - | - | - | - | - | - | - |
| 59 | 800 | 800 | - | - | - | - | - | - | - | - |

[Comparative Example]

In Comparative Example No. 101, the alloy was based on a Cu-30 Zn alloy and the stress relaxation resistance was deteriorated.

In Comparative Example No. 102, the alloy was a Cu-20 Zn-based alloy into which Ni, Fe, and P were not added, and the stress relaxation resistance was deteriorated compared to the Cu-20 Zn-based alloy in Examples of the present invention.

In Comparative Example No. 103, the alloy was a Cu-20 Zn-based alloy into which Sn, Fe, and P were not added, and the stress relaxation resistance was deteriorated compared to the Cu-20 Zn-based alloy in Examples of the present invention.

In Comparative Example No. 104, the alloy was a Cu-15 Zn-based alloy into which Sn, Ni, and Fe were not added, and the stress relaxation resistance was deteriorated compared to the Cu-15 Zn-based alloy in Examples of the present invention.

In Comparative Example No. 105, the alloy was a Cu-15 Zn-based alloy into which Sn, Ni, and P were not added, and the stress relaxation resistance was deteriorated compared to the Cu-15 Zn-based alloy in Examples of the present invention.

In Comparative Example No. 106, the alloy was a Cu-10 Zn-based alloy in which the H content was out of the range of the present invention, and as a result of cutting the ingot, a large number of blowholes were present inside the ingot, and thus the subsequent working was stopped.

In Comparative Example No. 107, the alloy was a Cu-10 Zn-based alloy in which the O content was out of the range of the present invention, and fracture occurred in the elastic range during the tensile test and therefore the evaluation was stopped.

In Comparative Example No. 108, the alloy was a Cu-10 Zn-based alloy in which the S content was out of the range of the present invention, and cracking occurred during hot rolling and therefore the subsequent working was stopped.

In Comparative Example No. 109, the alloy was a Cu-10 Zn-based alloy in which the C content was out of the range of the present invention, and cracking occurred during hot rolling and therefore the subsequent working was stopped.

On the other hand, in Examples No. 18 to 27, 29 to 42, 45 to 54 and 56 to 60 of the present invention, each content of the respective alloy elements was in the range defined in the present invention, the ratios between the alloy elements were in the range defined in the present invention, and the amounts of the gas impurity elements were in the range defined in the present invention. As a result, it was verified that the stress relaxation resistance was superior, conductivity, yield strength, and bendability was good, and applicability to a connector or other terminal members is sufficient.

INDUSTRIAL APPLICABILITY

The copper alloy for an electric and electronic device of the present invention has reliably and sufficiently excellent stress relaxation resistance and excellent properties such as strength, bendability, and conductivity. Therefore, according to the copper alloy for an electric and electronic device of the present invention, it is possible to provide a copper alloy sheet for an electric and electronic device having excellent bendability. In addition, according to the copper alloy for an electric and electronic device and the copper alloy sheet for an electric and electronic device of the present invention, it is possible to provide a component for an electric and electronic device and a terminal in which the thickness can be reduced compared to the conventional alloy and the contact pressure with the opposite-side conductive member can be sufficiently maintained even when the thickness is reduced. Further, according to the component for an electric and electronic device and terminal of the present invention, the size and the weight of the electric and electronic device can be reduced.

**Claims**

1. A copper alloy for an electric and electronic device, the copper alloy comprising:

> more than 2.0 mass% and 15.0 mass% or less of Zn;
> 0.10 mass% to 0.90 mass% of Sn;
> 0.05 mass% to less than 1.00 mass% of Ni;
> 0.001 mass% to 0.080 mass% of Fe;
> 0.005 mass% to 0.100 mass% of P;
> optionally 0.001 mass% to less than 0.100 mass% of Co and
> the balance being Cu and unavoidable impurities,

wherein a ratio (Fe+Co)/Ni of a total content of Fe and Co to a Ni content satisfies 0.002≤(Fe+Co)/Ni<1.500 by atomic ratio,

a ratio (Ni+Fe+Co)/P of a total content (Ni+Fe+Co) of Ni, Fe, and Co to a P content satisfies 3.0<(Ni+Fe+Co)/P<100.0 by atomic ratio,

a ratio Sn/(Ni+Fe+Co) of a Sn content to the total content (Ni+Fe+Co) of Ni, Fe, and Co satisfies 0.10<Sn/(Ni+Fe+Co)<5.00 by atomic ratio,

the H content is 10 mass ppm or less,

the O content is 100 mass ppm or less,

the S content is 50 mass ppm or less, and

the C content is 10 mass ppm or less.

2. The copper alloy for an electric and electronic device according to claim 1 which contains 0.001 mass% to less than 0.100 mass% of Co.

3. The copper alloy for an electric and electronic device according to claim 1 or 2,
   wherein the copper alloy has mechanical properties including a 0.2% yield strength of 300 MPa or higher.

4. A copper alloy sheet for an electric and electronic device comprising:

   a rolled material formed of the copper alloy for an electric and electronic device according to any one of claims 1 to 3,
   wherein a thickness is in a range of 0.05 mm to 1.0 mm.

5. The copper alloy sheet for an electric and electronic device according to claim 4,
   wherein a surface is plated with Sn.

6. A conductive component for an electric and electronic device comprising:
   the copper alloy for an electric and electronic device according to any one of claims 1 to 3.

7. A terminal comprising:
   the copper alloy for an electric and electronic device according to any one of claims 1 to 3.

8. The conductive component for an electric and electronic device according to claim 6, comprising:
   the copper alloy sheet for an electric and electronic device according to claim 4 or 5.

9. The terminal according to claim 7, comprising:
   the copper alloy sheet for an electric and electronic device according to Claim 4 or 5.


**Patentansprüche**

1. Kupferlegierung für eine elektrische und elektronische Vorrichtung, wobei die Kupferlegierung umfasst:

   mehr als 2,0 Masse-% und 15,0 Masse-% oder weniger Zn,
   0,10 Masse-% bis 0,90 Masse-% Sn,
   0,05 Masse-% bis weniger als 1,00 Masse-% Ni,
   0,001 Masse-% bis 0,080 Masse-% Fe,
   0,005 Masse-% bis 0,100 Masse-% P,
   gegebenenfalls 0,001 Masse-% bis weniger als 0,100 Masse-% Co und
   den Rest, der Cu und unvermeidliche Verunreinigungen ist,
   wobei das Verhältnis (Fe+Co)/Ni eines Gesamtgehalts von Fe und Co zu einem Ni-Gehalt 0,002≤(Fe+Co)/Ni<1,500 als Atomverhältnis erfüllt,
   ein Verhältnis (Ni+Fe+Co)/P eines Gesamtgehalts (Ni+Fe+Co) von Ni, Fe und Co zu einem P-Gehalt 3,0<(Ni+Fe+Co)/P<100,0 als Atomverhältnis erfüllt,
   ein Verhältnis Sn/(Ni+Fe+Co) eines Sn-Gehalts zu dem Gesamtgehalt (Ni+Fe+Co) von Ni, Fe und Co 0,10<Sn/(Ni+Fe+Co)<5,00 als Atomverhältnis erfüllt,
   der H-Gehalt 10 Masse-ppm oder weniger beträgt,
   der O-Gehalt 100 Masse-ppm oder weniger beträgt,

der S-Gehalt 50 Masse-ppm oder weniger beträgt und
der C-Gehalt 10 Masse-ppm oder weniger beträgt.

2. Kupferlegierung für eine elektrische und elektronische Vorrichtung gemäß Anspruch 1, die 0,001 Masse-% bis weniger als 0,100 Masse-% Co enthält.

3. Kupferlegierung für eine elektrische und elektronische Vorrichtung gemäß Anspruch 1 oder 2,
wobei die Kupferlegierung mechanische Eigenschaften einschließlich einer 0,2 %-Dehngrenze von 300 MPa oder höher aufweist.

4. Kupferlegierungsblech für eine elektrische und elektronische Vorrichtung, umfassend:

ein gewalztes Material, das aus der Kupferlegierung für eine elektrische und elektronische Vorrichtung gemäß irgendeinem der Ansprüche 1 bis 3 gebildet ist,
wobei eine Dicke in einem Bereich von 0,05 mm bis 1,0 mm liegt.

5. Kupferlegierungsblech für eine elektrische und elektronische Vorrichtung gemäß Anspruch 4,
wobei eine Oberfläche mit Sn plattiert ist.

6. Leitfähige Komponente für eine elektrische und elektronische Vorrichtung, umfassend:
die Kupferlegierung für eine elektrische und elektronische Vorrichtung gemäß irgendeinem der Ansprüche 1 bis 3.

7. Klemme, umfassend:
die Kupferlegierung für eine elektrische und elektronische Vorrichtung gemäß irgendeinem der Ansprüche 1 bis 3.

8. Leitfähige Komponente für eine elektrische und elektronische Vorrichtung gemäß Anspruch 6, umfassend:
das Kupferlegierungsblech für eine elektrische und elektronische Vorrichtung gemäß Anspruch 4 oder 5.

9. Klemme gemäß Anspruch 7, umfassend:
das Kupferlegierungsblech für eine elektrische und elektronische Vorrichtung gemäß Anspruch 4 oder 5.


**Revendications**

1. Alliage de cuivre pour un dispositif électrique et électronique, l'alliage de cuivre comprenant :

plus de 2,0 % en masse et 15,0 % en masse ou moins de Zn ;
de 0,10 % en masse à 0,90 % en masse de Sn ;
de 0,05 % en masse à moins de 1,00 % en masse de Ni ;
de 0,001 % en masse à 0,080 % en masse de Fe ;
de 0,005 % en masse à 0,100 % en masse de P ;
facultativement de 0,001 % en masse à moins de 0,100 % en masse de Co et
le reste étant du Cu et des impuretés inévitables,
dans lequel un rapport (Fe+Co)/Ni d'une teneur totale en Fe et en Co à une teneur en Ni satisfait $0,002 \leq$ (Fe+Co)/Ni < 1,500 en rapport atomique,
un rapport (Ni+Fe+Co)/P d'une teneur totale (Ni+Fe+Co) en Ni, en Fe et en Co à une teneur en P satisfait 3,0 < (Ni+Fe+Co)/P < 100,0 en rapport atomique,
un rapport Sn/(Ni+Fe+Co) d'une teneur en Sn à la teneur totale (Ni+Fe+Co) en Ni, en Fe et en Co satisfait 0,10 < Sn/(Ni+Fe+Co) < 5,00 en rapport atomique,
la teneur en H est de 10 ppm en masse ou moins,
la teneur en O est de 100 ppm en masse ou moins,
la teneur en S est de 50 ppm en masse ou moins, et
la teneur en C est de 10 ppm en masse ou moins.

2. Alliage de cuivre pour un dispositif électrique et électronique selon la revendication 1 qui contient de 0,001 % en masse à moins de 0,100 % en masse de Co.

3. Alliage de cuivre pour un dispositif électrique et électronique selon la revendication 1 ou 2,

dans lequel l'alliage de cuivre a des propriétés mécaniques incluant une limite d'élasticité à 0,2 % de 300 MPa ou supérieure.

4. Feuille d'alliage de cuivre pour un dispositif électrique et électronique comprenant :

   un matériau laminé formé de l'alliage de cuivre pour un dispositif électrique et électronique selon l'une quelconque des revendications 1 à 3,
   dans laquelle une épaisseur est dans une plage de 0,05 mm à 1,0 mm.

5. Feuille d'alliage de cuivre pour un dispositif électrique et électronique selon la revendication 4,
   dans laquelle une surface est plaquée avec du Sn.

6. Composant conducteur pour un dispositif électrique et électronique comprenant :
   l'alliage de cuivre pour un dispositif électrique et électronique selon l'une quelconque des revendications 1 à 3.

7. Borne comprenant :
   l'alliage de cuivre pour un dispositif électrique et électronique selon l'une quelconque des revendications 1 à 3.

8. Composant conducteur pour un dispositif électrique et électronique selon la revendication 6, comprenant :
   la feuille d'alliage de cuivre pour un dispositif électrique et électronique selon la revendication 4 ou 5.

9. Borne selon la revendication 7, comprenant :
   la feuille d'alliage de cuivre pour un dispositif électrique et électronique selon la revendication 4 ou 5.

FIG. 1

```
┌─────────────────────┐
│        MELT         │  ──── S01
│    CASTING STEP     │
└─────────────────────┘
           │
           ▼
┌─────────────────────┐
│       INGOT         │
└─────────────────────┘
           │
           ▼
┌─────────────────────┐
│    HEATING STEP     │  ──── S02
└─────────────────────┘
      │         │
      │         ▼
      │   ┌──────────────┐
      │   │ HOT WORKING  │  ──── S03
      │   │    STEP      │
      │   └──────────────┘
      ▼         │
┌─────────────────────┐
│ INTERMEDIATE PLASTIC│  ──── S04
│    WORKING STEP     │
└─────────────────────┘
           │
           ▼
┌─────────────────────┐
│  INTERMEDIATE HEAT  │  ──── S05
│   TREATMENT STEP    │
└─────────────────────┘
      │         │
      │         ▼
      │   ┌──────────────┐
      │   │ FINISH PLASTIC│ ──── S06
      │   │  WORKING STEP │
      │   └──────────────┘
      │         │
      │         ▼
      │   ┌──────────────┐
      │   │ FINISH HEAT  │  ──── S07
      │   │TREATMENT STEP│
      │   └──────────────┘
      ▼         │
┌─────────────────────┐
│COPPER ALLOY FOR ELECTRIC│
│  AND ELECTRONIC DEVICE  │
└─────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012282680 A
- JP 2013252330 A
- JP H533087 B
- JP 2006283060 A

- JP 3953357 B
- JP 3717321 B
- US 6471792 B1

**Non-patent literature cited in the description**

- **J. M. ANDRADE.** *Spectrochimica Acta. Part B,* 2010, vol. 65 (8), 658-663